# EUROPEAN PATENT APPLICATION

(11) **EP 2 123 725 A1**
(43) Date of publication of application: **25.11.2009**
(21) Application number: 07860030.1
(22) Date of filing: 25.12.2007
(51) Int. Cl.: C09D 179/04, C09D 7/12

(54) **POLYBENZOIMIDAZOLE COATING COMPOSITION**

(30) Priority: 28.12.2006 JP 2006356553
(71) Applicant: PBI Advanced Materials Co. Ltd., Tsu-shi Mie (JP); Yoshida Skt Co., Ltd., Aichi 451-0062 (JP)
(72) Inventor: SHIGA, Akihiko, Geino-cho, Tsu-shi, Mie 514-2211 (JP); YOSHIDA, Yoshitaka, Nagoya-shi Aichi 451-0062 (JP); TOMIHASHI, Nobuyuki, Nagoya-shi Aichi 451-0062 (JP); KATOU, Yusei, Nagoya-shi Aichi 451-0062 (JP)
(74) Representative: Smyth, Gyles Darren
(86) International application number: PCT/JP2007/074801
(87) International publication number: WO 2008/081770

(57) **Abstract**

The present invention provides a polybenzimidazole coating composition that can be easily applied to a base material and is capable of forming a coating film having a large thickness. In this composition, particulate polybenzimidazole is dispersed in a mixed solvent. The mixed solvent contains water and a polar solvent in which the polybenzimidazole dissolves at a high solubility.

## Description

### TECHNICAL FIELD

The present invention relates to a polybenzimidazole coating composition.

### BACKGROUND ART

Polybenzimidazole has a high resistance to energy and chemicals. Therefore the polybenzimidazole is very useful as a material of a protection coating of various base materials. In such a use, generally a coating composition containing the polybenzimidazole is applied to the surface of a base material, and the coating composition is baked as necessary to harden it and form a coating (for example, see patent document 1).

Normally the polybenzimidazole coating composition used in the above-described application method is a solution in which the polybenzimidazole is dissolved in polar solvents capable of dissolving the polybenzimidazole therein.

However, the polybenzimidazole has a low solubility in a solvent owing to its high resistance to chemicals, for example, its resistance to the solvent. The polybenzimidazole coating composition is obtained in the form of a solution has a comparatively low solid concentration. In fact, the polybenzimidazole coating composition commercially available has a solid concentration of at most about 10 wt%. Therefore in forming a coating film on the base material by applying the polybenzimidazole coating composition thereto, it is difficult to obtain a thick coating film. Thus the thickness of the coating film that can be formed is about 5µm at most. In thickening the coating film by applying the polybenzimidazole coating composition to the base material at a plurality of times, there is a tendency for the coating film to have a nonuniform thickness owing to the poor solubility in the solvent. In addition an end of the coating film to which the polybenzimidazole coating composition has been applied rises round, and hence the formed coating film has an unfavorable smoothness. To solve the above-described problems, in a known method, the base material is coated with the coating composition by heating both the coating composition and the base material up to about 70 to 120°C, while the solvent is being vaporized. But this method causes operations to be complicated. In addition when the base material is thin and has a low heat capacity, it is difficult to make the thickness of the coating film uniform.

Patent document 1: Japanese Patent Application Laid-Open No. 5-339401

### DISCLOSURE OF THE INVENTION

### PROBLEMS TO BE SOLVED BY THE INVENTION

In view of the above-described problem, the present invention has been made. It is an object of the present invention to provide a polybenzimidazole coating composition that has improved the problems of the conventional art.

### MEANS FOR SOLVING THE PROBLEMS

In a polybenzimidazole coating composition of the present invention, polybenzimidazole particles having an average particle diameter of 0.5 to 50µm are dispersed in a mixed solvent; and the mixed solvent comprises a polar solvent in which the polybenzimidazole dissolves at not less than 1g/l at 20°C and water.

### EFFECT OF THE INVENTION

The present invention provides the polybenzimidazole coating composition which is capable of smoothly and thickly coating a base material at normal temperature and is excellent in stability during storage. By using the polybenzimidazole coating composition, it is unnecessary to perform a particular operation such as heating of the base material and the composition in coating the base material therewith and easy to perform an applying operation. Further the coating made of the polybenzimidazole coating composition of the present inventionhas a high adhesion to the base material and fastness properties of being high in its resistance to energy and chemicals and is thus useful for protecting the base material.

### BEST MODE FOR CARRYING OUT THE INVENTION

A polybenzimidazole coating composition of the present invention contains polybenzimidazole particles and a mixed solvent.

The polybenzimidazole herein means a polymer containing substituted or unsubstituted benzimidazole as a monomer unit. When the benzimidazole has a substituent group, the substituent group is arbitrarily selected in a range in which the effect of the present invention is not inhibited. Preferable polybenzimidazole is expressed by a general formula (I) shown below. 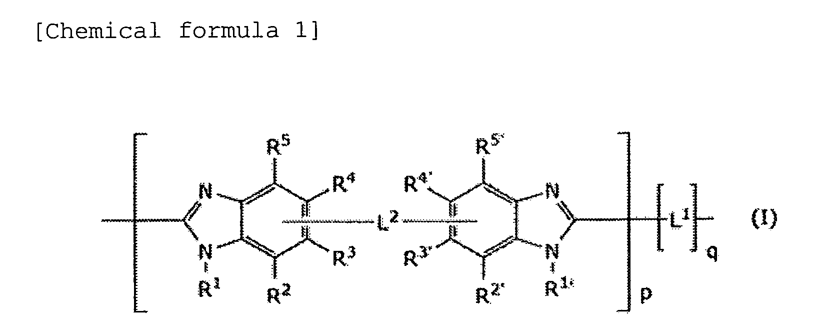 where R¹ to R⁵ and R¹' to R⁵' denote substituent groups independently selected. L¹ denotes a bivalent connecting group. L² denotes a bivalent connecting group connecting any one of R¹ to R⁵ and any one of R¹' to R⁵' to each other. p and q denote a numeral showing a polymerization degree. It is preferable that R¹ to R⁵ and R¹' to R⁵' are independently hydrogen, an alkyl group having 1 to 10 carbon atoms, an aryl group having 6 to 12 carbon atoms, halogen, a hydroxyl group or an alkoxy group having 1 to 10 carbon atoms. It is preferable that L¹ and L² independently consist of a single bond or a bivalent connecting group consisting of a chalcogen atom, an aromatic compound, an aliphatic compound, an alicyclic compound or a heterocyclic compound.

When L¹ or L² is the connecting group consisting of the aliphatic compound, it is more favorable that L¹ or L² is alkylene having 1 to 8 carbon atoms. When L¹ or L² is the connecting group consisting of the aromatic compound, it is favorable that L¹ or L² is phenylene or naphthylene. When L¹ or L² is the connecting group consisting of the heterocyclic compound, it is favorable that L¹ or L² is pyridinylene, pyrazinylene, furanylene, quinolinylene, thiophenylene, pyranylene, indenylene or furyrenylene. When L¹ or L² is the connecting group consisting of the chalcogen, it is favorable that L¹ or L² is -O-, -S- or -SO₂-.

Of the polybenzimidazole shown by the general formula (I), preferable polybenzimidazole is expressed by a general formula (Ia) shown below. 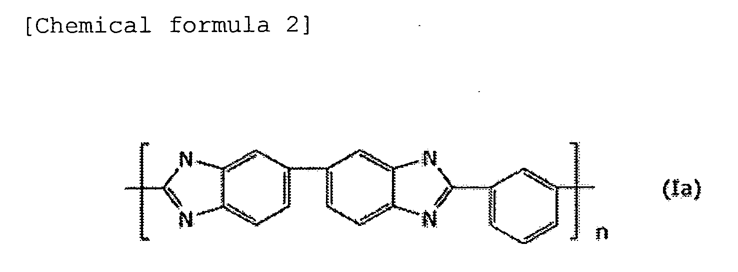 where n denotes a numeral showing a polymerization degree.

The polybenzimidazole which can be used in the present invention is capable of having intrinsic viscosities in a wide range according to its structure and molecular weight. In the present invention, the molecular weight of the polybenzimidazole is generally 2,000 to 1,000,000, favorably 2,000 to 300,000, and more favorably 5,000 to 100,000. The intrinsic viscosity of the polybenzimidazole that is used in the present invention is preferably not less than 0.2.

Examples of the polybenzimidazole are as shown below. Poly-2,2'-(m-phenylene)-5,5'-dibenzimidazole (general formula(Ia), poly-2,2'-(diphenylene-2,2''')-5,5'-dibenzimidazole, poly-2,2'-(diphenylene-4'',4''')-5,5'-dibenzimidazole, poly-2,2'-(1'', 1'', 3''-trimethylindanylene)-3'', 5''-p-phenylene-5,5'-dibenzimidazole, 2,2'-(m-phenylene)-5,5'-dibenzimidazole/2,2'-(1'', 1'', 3''-trimethylindanylene)-3'', 5''-p-phenylene-5,5'-dibenzimidazole copolymer, 2,2'-(m-phenylene)-5,5'-dibenzimidazole/2,2'-(diphenylene-2'',2''') -5,5'-dibenzimidazole copolymer, poly-2,2'-(furylene-2'',5'')-5,5'-dibenzimidazole, poly-2,2'-(naphthalene-1'', 6'')-5,5'-dibenzimidazole, poly-2,2'-(naphthalene-2", 6'')-5,5'-dibenzimidazole, poly-2,2'-amylene-5,5'-dibenzimidazole, poly-2,2'-octamethylene-5,5'-dibenzimidazole, poly-2,2'-cyclohexenyl-5,5'-dibenzimidazole, poly 2,2'-(m-phenylene)-5,5'-di(benzimidazole) ether, poly 2,2'-(m-phenylene)-5,5'-di(benzimidazole) sulfide, poly 2,2'-(m-phenylene)-5,5'-di(benzimidazole) sulfone, poly 2,2'-(m-phenylene)-5,5'-di(benzimidazole) methane, poly 2,2'-(m-phenylene)-5,5'-di(benzimidazole) propane 2,2, and polyethylene-1,2,2,2''-(m-phenylene)-5,5'-di(benzimidazole) ethylene-1,2.

In the composition of the present invention, the polybenzimidazole is dispersed in the form of particles in the mixed solvent. The polybenzimidazole particles can be prepared by cooling a crude polymerized materials or pelletized polybenzimidazole with liquid nitrogen and grinding them with a grinder such as a hammer mill, ajetmill, apinmill, andacuttermill. Thepolybenzimidazole particles are dispersed in the mixed solvent as particles having an average particle diameter of 0.5 to 50µm. The average particle diameter of the polybenzimidazole particles is set to not less than 0.5µm and favorably not less than 1µm so that the polybenzimidazole is ground easily in producing the particles, that the particles are not easily dissolved in a polar solvent, and that the stability of the polybenzimidazole coating composition during storage can be maintained preferably. In addition ,the average particle diameter of the polybenzimidazole particles is set to not more than 50µm, favorably not more than 30µm, and more favorably not more than 20µm to easily dissolve the polybenzimidazole after the coating of the base material with the polybenzimidazole coating composition finishes and favorably maintain the smoothness of a coating film after the application of the polybenzimidazole coating composition to the base material finishes. The average particle diameter of the polybenzimidazole particles can be measured by measuring the sectional area of the particles with a dynamic light-scattering method, a laser diffraction scattering method or an electron microscope and thereafter by using an image-processing method for computing the diameter of particles.

The polybenzimidazole coating composition of the present invention contains the mixed solvent. The mixed solvent contains the polar solvent in which the polybenzimidazole can be easily dissolved and water. In the polybenzimidazole coating composition of the present invention, the mixed solvent maintains the polybenzimidazole particles in the composition in a dispersed state to keep the coating property preferable when the polybenzimidazole coating composition is applied to the base material. After the polybenzimidazole coating composition is applied to the base material, only water is vaporized to dissolve the polybenzimidazole particles in the polar solvent that has remained. Thus the mixed solvent has an action of making the smoothness of the coating film favorable.

The dispersed polybenzimidazole dissolves in the polar solvent at not less than 1g/l and favorably at not less than 5g/l at 20°C. When the solubility is low, the smoothness of the coating film formed by applying the polybenzimidazole coating composition to the base material tends to deteriorate. To dissolve the polybenzimidazole particles in the remaining polar solvent by vaporizing only the water after the polybenzimidazole coating composition is applied to the base material, it is preferable that the polar solvent has a higher boiling point than the water.

As such polar solvents, it is possible to arbitrarily select polar solvents that satisfy the above-described condition of the solubility of the polybenzimidazole therein. It is preferable that the polar solvent is at least one kind selected from the group consisting of N,N-dimethylformamide, N,N-dimethylacetamide, dimethyl sulfoxide, and N-methylpyrrolidone. It is possible to use thesepolar solvents in combination of not less than two kinds thereof. Of these polar solvents, the dimethyl sulfoxide has a high solvent permeability in the polybenzimidazole and has an effect of accelerating the solubility of the polybenzimidazole by using the dimethyl sulfoxide in combination with other polar solvents. The polybenzimidazole is liable to have a high solubility in the exemplified above polar solvents other than the dimethyl sulfoxide. When these polar solvents are used singly, they are liable to dissolve the polybenzimidazole particles dispersed in the composition. When the polybenzimidazole particles are dissolved, the particles are solidified in the composition. Thus there is a possibility that the stability of the polybenzimidazole coating composition during storage deteriorates.

The water contained in the mixed solvent lowers the solubility of the polybenzimidazole in the mixed solvent and keeps the polybenzimidazole particles in a dispersed state, thus having the action of improving the stability of the coating composition during storage and assisting to improve the solvent permeability into the polybenzimidazole particles. The mechanism that the water assists to improve the solvent permeability into the polybenzimidazole particles has not been clarified. However it is conceivable that in drying the coating film, the water having a low vapor pressure vaporizes first, and the polar solvent is enclosed in the coating film owing to the vapor pressure, and the polar solvent permeates in the particles, which allows the particles to dissolve easily in the mixed solvent. In fact, when the solvent consists of the only N-methylpyrrolidone, the polybenzimidazole particles do not easily dissolve in the solvent, even though the solvent is heated up to 80°C, for example. On the other hand, when the mixed solvent of the present invention is used, the polybenzimidazole particles dissolve easily therein.

Instead of water, it is possible to use a solvent having dispersion stability of the polybenzimidazole particles and the action of assisting the solvent permeability of the solvent in the polybenzimidazole particles to an extent similar to that of the water. But such a solvent is very specific and disadvantageous in terms of the availability and the cost.

In the mixed solvent of the present invention, as described above, the water has the action of lowering the solubility of the polybenzimidazole particles. To keep the dispersibility of the polybenzimidazole particles or adjust the surface tension of the composition, it is possible to additionally use organic solvents other than the water as a co-solvent. As such a co-solvent, it is possible to use (a) alcohol, for example, isopropyl alcohol, t-butyl alcohol, furfuryl alcohol, diethylene glycol, diacetone alcohol, 2-ethylhexanol, 3-ethoxyethanol, 2-methoxyethanol, 2-butoxyethanol; (b) ether, for example, diethylene glycol dimethyl ether, diethylene glycol diethyl ether, diethylene glycol dibutyl ether, 1,2-dibutoxyethane, ethyleneglycolmonoacetate, diethylene glycol monomethyl ether, diethylene glycol monoethyl ether, diethylene glycol monobutyl ether, triglyme; and (c) ketone, for example, acetone and the like.

The mixing ratio of the mixed solvent of the present invention is arbitrarily selected according to purpose. The mixing ratio of the water to the mixed solvent is favorably 5 to 75 wt% and more favorably 20 to 60 wt%. As described above, when the mixing ratio of the water is extremely low, the solubility of the polybenzimidazole is high, and the lifetime of the polybenzimidazole coating composition tends to deteriorate. On the other hand, when the mixing ratio of the water is extremely high, the solvent for dissolving the polybenzimidazole therein is insufficient after the polybenzimidazole coating composition is applied to the base material. Thus there is a possibility that smoothness of the coating film deteriorates. The mixing ratio of the co-solvent depends on the mixing ratio of the water. When the co-solvent is used, the mixing ratio of the co-solvent to the mixed solvent is not more than 50 wt% and favorably not more than 40 wt%.

In the present invention, the mixing ratio of the polybenzimidazole particles to the entire coating composition depends on an application method and the thickness of the coating film to be formed and is favorably 10 to 60 wt% and more favorably 15 to 50 wt%. For example, when spray coating is adopted as the coating method, the mixing ratio of the polybenzimidazole particles to the entire coating composition is preferably 20 to 40 wt%.

In addition to the above-described polybenzimidazole particles and the mixed solvent, the polybenzimidazole coating composition of the present invention is capable of containing arbitrary additives according to purpose. As such additives, it is possible to list, for example, a pigment, a leveling agent, an anti-foaming agent, a filler, a lubricant, and a conductive agent.

The polybenzimidazole coating composition of the present invention can be applied to the base material by an arbitrary conventional method. As such methods, spray application, roll application, brush application, dip application, and curtain application and the like are listed. When the spray application is performed, the coating composition of the present invention is capable of forming a thick coating film, can be easily used, and is capable of coating objects having any configurations therewith. Therefore it is preferable to use the spray application in applying the coating composition to objects. When an object to be coated with the coating composition is flat, it is also preferable to use the roll application easily capable of applying the coating composition in a wide area.

Acase inwhich the coating composition of the present invention is applied to the base material by the spray application is described below. Initially the coating composition of the present invention is applied to the surface of the base material at normal temperature. When the coating composition of the present invention is used, it is possible to apply the coating composition to the surface of the base material at normal temperature without heating the base material and the coating composition and form the coating film having a thickness of 15 to 30µm at a single application. The formed coating film is heated to 60 to 120°C and preferably 80 to 100°C to vaporize the water and the co-solvent and dry the coating film. Although the heating time depends on the thickness of the coating film and the like, it is normally 5 to 30 minutes. As a result of the removal of the water and the co-solvent, a large amount of the polar solvent in which the polybenzimidazole dissolves at a high solubility remains in the coating film. Thus the polybenzimidazole dissolves in the polar solvent and thereby the coating film becomes smooth. Further the coating film is heated at about 350°C as necessary to solidify it. In this manner, it is possible to obtain a coating having a high strength.

That is, by using the coating composition of the present invention, it is possible to form a thicker coating film than the conventional coating composition and eliminate the need for performing a complicated operation such as heating. Further because it is unnecessary to performing heating, the coating composition can be easily applied to the base material having a low heat capacity. By repeatedly applying the coating composition to the base material, it is possible to form the coating filmhaving a thickness of exceeding 200µm. Thus the coating composition is suitable for a sliding part and an insulating material.

### Example 1

After 54g of polybenzimidazole (AZ Electronic Materials Inc.) having an average particle diameter of 13µm, 54g of water, 18g of butyl CELLOSOLVE, 20g of dimethyl sulfoxide (hereinafter referred to as DMSO), and 54g of N-methylpyrrolidone (hereinafter referred to as NMP) were put in a container of 500ml, these components were well stirred by a stirring apparatus to uniformly disperse them. Thereby a coating composition containing the polybenzimidazole at 27 wt% was obtained. By spray coating, an A5052 aluminum base material (100mm × 50mm × 1mm) on which only solvent degreasing treatment was coated with the coating composition at normal temperature and at a pressure of 0.2 MPa. The diameter of a nozzle was 0.8φ. After the applied coating composition was dried and dissolved at 80 to 100°C, the temperature was raised to 150°C and kept at 150°C for two to three hours. After the temperature was raised to 200°C and kept at 200°C for one hour, the temperature was raised to 250°C and kept at 250°C for three hours. Thereafter the A5052 aluminum base material was baked at 300°C for one hour and at 350°C for one hour to obtain a coating film having a thickness of 22µm.

The application property, the smoothness of the coating film, the adhesion of the coating film, and the stability of the coating composition after the elapse of 10 days were examined. Obtained results are as shown in table 1.

### Examples 2 through 8

Except that the composition of the solvent and the average particle diameter of the polybenzimidazole particles were altered as shown in table 1, evaluation was made in a manner similar to that of the example 1. Obtained results are as shown in table 1. Comparative Examples 1 through 3

Except that a mixed solvent, shown in table 1, which did not contain water was used, evaluation was made in a manner similar to that of the example 1. Obtained results are as shown in table 1.

### Comparative Example 4

In accordance with the description of the example 1 of the patent document 1, a coating composition containing 10 wt% of the polybenzimidazole was prepared. Evaluation was made in a manner similar to that of the example 1. Obtained results are as shown in table 1.

### Comparative Example 5

Except that the content of the polybenzimidazole was set to 27 wt%, a coating composition was prepared in a manner similar to that of the comparative example 4. Evaluation was made in a manner similar to that of the example 1. Obtained results are as shown in table 1.

**[Table 1]**

| | Particle diameter (pm) | Solvent Composition (%) | | | | | Coating property at normal temprature | Smoothness | Adhesion | Stability during storage |
|---|---|---|---|---|---|---|---|---|---|---|
| | | Water | DMSO^{*1} | NMP^{*2} | DMAC^{*3} | BS^{*4} | | | | |
| Example | | | | | | | | | | |
| 1 | 13 | 37.0 | 12.3 | 13.7 | - | 37.0 | ○ | ○ | 98/100 | ○ |
| 2 | 13 | 42.5 | 8.0 | 41.5 | - | 8.0 | ○ | ○ | 100/100 | ○ |
| 3 | 13 | 42.5 | - | 42.5 | - | 15.0 | ○ | △ | 97/100 | ○ |
| 4 | 13 | 43.0 | 9.7 | 22.6 | 14.7 | 10.0 | ○ | ○ | 100/100 | ○ |
| 5 | 13 | 15.5 | 15.5 | 40.2 | 14.3 | 14.5 | ○ | ○ | 100/100 | △ |
| 6 | 13 | 50.0 | 8.5 | 33.5 | - | 8.0 | ○ | △ | 99/100 | ○ |
| 7 | 13 | 42.5 | 8.0 | 41.5 | - | 8.0 | ○ | △ | 95/100 | ○ |
| 8 | 13 | 15.0 | 17.5 | 40.5 | 12.0 | 15.0 | ○ | ○ | 100/100 | ○ |

| Comparative Example | | | | | | | | | | |
|---|---|---|---|---|---|---|---|---|---|---|
| 1 | 13 | - | 47.9 | 52.1 | - | - | ○ | △ | 88/100 | × |
| 2 | 13 | - | 10.5 | 50.0 | 24.0 | 15.5 | ○ | × | 90/100 | × |
| 3 | 13 | - | - | 55.5 | 24.0 | 20.5 | ○ | × | 65/100 | × |
| 4 | 13 | - | - | - | 100.0 | - | △ | △ | 95/100 | solution |
| 5 | 13 | - | - | - | 100.0 | - | × | - | - | solution |

| | | | | | | | | | | |
|---|---|---|---|---|---|---|---|---|---|---|
| *1: DMSO: dimethyl sulfoxide *2: NMP: N-methylpyrrolidone *3: DMAC: N,N-dimethylacetamide *4: butyl CELLOSOLVE | | | | | | | | | | |

### Evaluation Criterion

### Coating Property at Normal Temperature

○: It was possible to uniformly atomize the coating composition and accomplish coating up to details.
△ The coating composition was atomized nonuniformly. It was difficult to accomplish coating up to details.
×: It was impossible to atomize the coating composition and accomplish coating.

### Smoothness

○: Ra was not more than 1
△: Ra was 1 to 2
×: Ra was not less than 2

### Adhesion

Evaluated in accordance with JIS K5400.

### Stability During Storage

○: Redispersion was easy.
△: Redispersion was easy by stirring a sediment to pieces with a stirring rod.
×: A sediment was not stirred to pieces with the stirring rod, and thus redispersion could not be accomplished.

## Claims

1. A polybenzimidazole coating composition comprising a polybenzimidazole particles and a mixed solvent, wherein the polybenzimidazole particles have an average particle diameter of 0.5 to 50µm are dispersed in a mixed solvent; and said mixed solvent comprises a polar solvent in which said polybenzimidazole dissolves at not less than 1g/l at 20°C and water.

2. A polybenzimidazole coating composition according to claim 1, wherein a content of said water in said mixed solvent is 5 to 75 wt%.

3. A polybenzimidazole coating composition according to claim 1 or 2, wherein said polar solvent is at least one kind selected from among N, N-dimethylformamide, N, N-dimethylacetamide, dimethyl sulfoxide, and N-methylpyrrolidone.

4. A polybenzimidazole coating composition according to any one of claims 1 through 3, wherein said mixed solvent further contains at least one kind selected from among alcohol, ether, and ketone.

5. A polybenzimidazole coating composition according to any one of claims 1 through 4, wherein a content of said polybenzimidazole is 10 to 60 wt%.

6. A method for forming a polybenzimidazole coating comprising the steps of:
applying a polybenzimidazole coating composition according to any one of claims 1 through 5 to a surface of a base material; and heating a formed coating film at 60 to 120°C.
